# EUROPEAN PATENT SPECIFICATION

(11) **EP 0 374 549 B1**
(45) Date of publication and mention of the grant of the patent: **15.03.1995**
(21) Application number: 89122225.9
(22) Date of filing: 01.12.1989
(51) Int. Cl.: B29C 45/27, B29C 45/73

(54) **Injection molding apparatus having fluid cooled inserts**
Spritzgiessvorrichtung mit durch Fluidum gekühlten Einsätzen
Dispositif de moulage par injection avec des inserts refroidis par un fluide

(30) Priority: 05.12.1988 CA 585023; 19.07.1989 CA 606082
(43) Date of publication of application: 27.06.1990
(73) Proprietor: MOLD-MASTERS LIMITED, Georgetown Ontario L7G 4X5 (CA)
(72) Inventor: Sheffield, James S., Loretto Ontario, L0G 1L0 (CA)
(74) Representative: Grünecker, Kinkeldey, Stockmair & Schwanhäusser Anwaltssozietät

(56) References cited:
- EP-A- 0 195 111
- DE-A- 3 143 748
- GB-A- 2 109 296
- GB-A- 2 202 787
- NL-A- 8 802 622
- US-A- 2 828 509

## Description

### BACKGROUND OF THE INVENTION

This invention relates to an injection molding apparatus according to the preamble of claim 1. An apparatus of this type is known from GB-A-2109296.

As is well known, the relationship between heating and cooling is critical to the successful operation of an injection molding apparatus. It is increasingly important to reduce cycle time, and usually the largest impediment in doing so is the speed of solidification in the gate area. In order to improve solidification speed it is necessary to remove or offset heat from the hot nozzle and friction heat from the material. This is particularly true in a hot tip gating apparatus having a number of heated nozzles or probes arranged to mold components such as caps or closures with inside gates where the heat accumulates in the mold core in the area around the gate surrounded by the cavity. Each nozzle has a heated nose portion as described in Canadian patent 1,261,576 to provide sufficient heat to the melt passing through the gate and it is difficult for this heat to escape to the surrounding cooled mold in view of the configuration of the cavity.

Similarly, the heating and cooling relationship is critical to the successful operation of some valve gated injection molding apparatuses, particularly for molding temperature critical materials such as polycarbonate.

### SUMMARY OF THE INVENTION

Accordingly, it is an object of the present invention to at least partially overcome the disadvantages of the prior art by providing additional cooling to the insert around the gate.

The above object of the present invention is achieved by the subject matter of claim 1.

Preferred embodiments and further improvements are defined in the subclaims. One embodiment of the present invention is described in the following with reference to the drawings of which,
Figure 1 is a section view of a portion of a valve gated injection molding apparatus having a gate insert with a circular fluid passage.
Figure 2 is an exploded isometric view,
Figure 3 is an assembled sectional view of the gate insert illustrating how it is made, and
Figure 4 is a schematic sectional view of the gate insert illustrating the flow pattern of the cooling water.

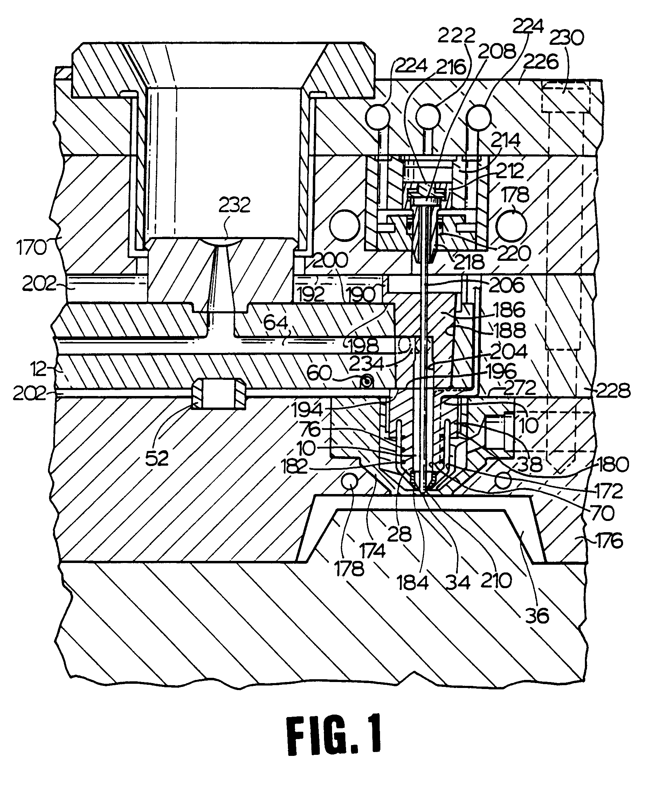

Reference is now made to Figure 1 which shows an embodiment of the invention. In this embodiment, a multi-cavity valve gated injection molding apparatus has an elongated manifold 12 extending between a back plate 170 and a number of nozzles 10. Each heated nozzle 10 is seated in a well 172 in a cooled gate insert 174 which is received in a cavity plate 176. Each nozzle 10 is heated by a helical electric heating element 76 which is integrally cast into it, and the back plate 170 and cavity plate 176 are cooled by pumping cooling water through cooling conduits 178. The nozzle 10 has an insulation bushing 38 which sits against an inwardly projecting shoulder 180 in the gate insert 174. This locates the nozzle 10 with its central bore 70 in alignment with a gate 34 leading to the cavity 36 and provides an insulative air space 182 between the heated nozzle 10 and the surrounding cooled gate insert 174. In this embodiment, the gate 34 is provided by a nozzle seal 184 which bridges the air space 182 between the heated nozzle 10 and the cooled gate insert 174.

A valve member bushing 186 is received in an opening 188 extending through the elongated manifold 12 in alignment with each of the nozzles 10. Each valve member bushing 186 has an outer flange 190 which extends into contact against the front surface 192 of the back plate 170 and a front face 194 which abuts against the rear face 196 of the nozzle 10. Each valve member bushing 186 also has a circumferential shoulder 198 which bears against the rear surface 200 of the manifold 12. Thus, the manifold is accurately located between the central locating ring 52 seated in the cavity plate 176 and the rear face 196 of the nozzle and the circumferential shoulder 198 of the bushings 36. This provides insulative air spaces 202 between the manifold 12 which is heated by an integral electrical heating element 60 and the cooled back plate 170 and the cavity plate 176.

Each valve member bushing 186 has a central bore 204 extending therethrough in alignment with the central bore 70 of the adjacent nozzle 10. An elongated valve member 206 extends through the aligned bores 70 and 204 of the nozzle 10 and bushing 186. The valve member 206 has an enlarged head 208 at its rear end and a tapered tip 210 at its forward end. The head 208 of the valve member 206 is engaged by valve member actuating mechanism which is seated in the back plate 170 to reciprocate the valve member 206 between a retracted open position and a forward closed position in which the tapered tip 210 is seated in the gate 34. In this embodiment, the actuating mechanism includes a piston 212 which reciprocates in a cylinder 214. The valve member 206 extends through the piston 212 and the enlarged head 208 is secured to it by a cap 216 as described in the applicant's U.S. patent number 4,698,013 which issued October 6, 1987. This piston 212 has an elongated neck portion 218 which protrudes out through a V-shaped high pressure seal 220 which is seated in the cylinder 214 to prevent leakage of pressurized hydraulic fluid. The actuating mechanism is driven by pressurized hydraulic fluid through fluid lines 222,224 which extend through a back cover plate 226. The back cover plate 226, back plate 170 and a spacer plate 228 are secured together by bolts 230 which extend into the cavity plate 176.

A melt passage 64 branches in the elongated manifold 12 to convey melt received from a molding machine (not shown) at a common inlet 232 to the central bore 70 of each nozzle 10 which leads to a respective cavity 36. As can be seen, the diameter of the central bore 70 of the nozzle 10 is sufficiently larger than the outside diameter of the valve member 206 extending centrally therethrough to form part of the melt passage 64. Each valve member bushing 186 also has a melt duct 234 which extends inwardly to connect the melt passage 64 in the manifold to the central bore 70.

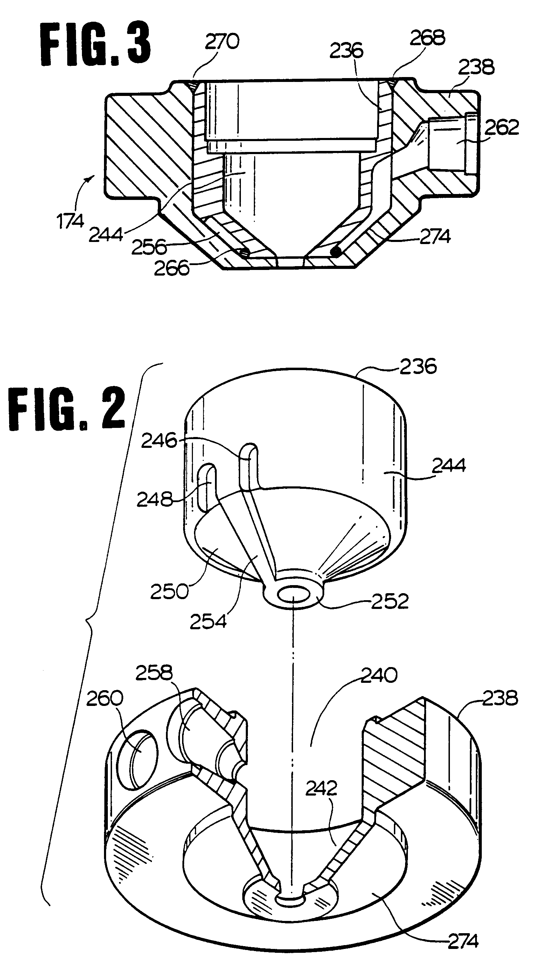

As clearly seen in Figures 2, 3 and 4, each gate insert 174 has an inner portion 236 and an outer portion 238 which are integrally brazed together. In this embodiment, both the inner and outer portions 236,238 are made of hot work tool steel. The outer portion 238 of the gate insert 174 has a central opening 240 therethrough which receives the inner portion 236. The inner surface 242 of the outer portion 238 matches the outer surface 244 of the inner portion 236 except that the outer surface 244 of the inner portion 236 has a pair of channels 246,248 extending rearwardly from a circular channel 250 adjacent the forward end 252 of the inner portion 236. When the inner and outer portions 236,238 of the gate insert 174 are integrally joined together with a baffle 254 located in the circular channel 250 between the pair of channels 246,248, the circular channel 250 forms a circular cooling fluid passage 256 which extends in the gate insert 174 around the nose portion 28 of the nozzle 10 adjacent the cavity 36. The channels 246,248 align with bores 258,260 through the outer portion 238 to form inlet and outlet cooling fluid ducts 262,264. These ducts 262,264 extend respectively from high and low pressure conduits to the circular passage 256 to provide a flow of cooling fluid such as water, through the circular passage. The rate of flow of cooling fluid through the passage 256 is controlled to dissipate heat at a predetermined rate which otherwise accumulates from the friction of the melt and from the heating element 76 in the nose portion 28 of the nozzle 10.

In use, the apparatus is assembled as shown and electrical power is applied to the heating elements 76,60 to heat the nozzle 10 and manifold 12 to a predetermined operating temperature. Thermal expansion of the elongated manifold 12 brings the central bore 204 of the bushing 186 into accurate alignment with the central bore 70 of the nozzle 10 and the force from the back plate 170 against the circular flange 190 of the bushing 186 prevents leakage between the nozzle and bushing and retains the nozzle 10 firmly in place. Hot pressurized melt is injected from a molding machine (not shown) into the melt passage 64 through the central inlet 232 according to a predetermined cycle. Controlled hydraulic fluid pressure is applied to the cylinders 214 through fluid lines 222,224 to simultaneously control actuation of the valve members 206 according to a predetermined cycle in a conventional manner. When the valve members 206 are in the retracted open position, the pressurized melt flows through the melt passage 64 and the gates 34 until the cavities 36 are full. When the cavities 36 are full, injection pressure is held momentarily to pack. The hydraulic pressure is then reversed to reciprocate the valve member 206 to the forward closed position in which the tip 210 of one of the valve members 206 is seated in each of the gates 34. The injection pressure is then released and, after a short cooling period, the mold is opened for ejection. After ejection, the mold is closed, hydraulic pressure is applied to retract the valve members 206 to the open position and melt injection pressure is reapplied to refill the cavities 36. The cycle is repeated continuously every few seconds with a frequency depending upon the number and size of the cavities and the type of material being molded. A continuous flow of cooling water is provided by pumping water through high and low pressure conduits which connect to the inlet and outlet ducts 262,264 leading to the circular passage 256 on opposite sides of the baffle 254. As seen in Figure 6, the cooling water flows in the inlet duct 262, around the circular passage 256, and back out the outlet duct 264. This flow of cooling water prevents the build up of excess heat which otherwise occurs in the gate insert 174 in the area adjacent the space 182 around the nose portion 28. Of course, the rate of flow of water through the circular passage 256 is controlled to remove a suitable amount of heat for any particular application.

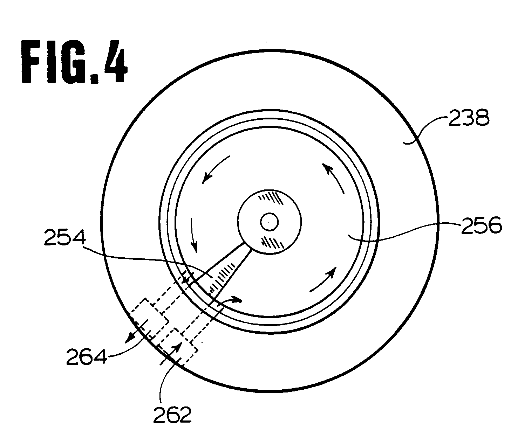

The method of making the gate inserts 174 will now be described with particular reference to Figures 2 and 3. The inner and outer portions 236,238 are made as shown with the channels 246,248,250 and bores 258,260 of a matching size machined in predetermined locations. The wedge shaped baffle 254 is tack welded into place in the circular channel 250 between where the pair of rearwardly extending channels 246,248 join it. A bead 266 of nickel alloy brazing paste is run around the circular channel 250 and the inner and outer portions 236,238 are then fitted together with the channels 246,248 in the inner portion 236 aligned with the matching bores 258,260 extending through the outer portion 238. After tack welding the inner and outer portions 236,238 together to maintain the this alignment, another bead 268 of nickel alloy brazing paste is run around a groove 270 formed between the inner and outer portions 236,238 (seen in Figure 4). The assembled portions 236,238 are then loaded in the upright position shown in batches in a vacuum furnace. As the furnace is gradually heated to a temperature in excess of the melting point of the brazing material, the furnace is evacuated to a relatively high vacuum to remove substantially all of the oxygen. Before the melting temperature of the brazing paste is reached, the vacuum is reduced by partially back filling with an inert gas such as argon or nitrogen. When the nickel alloy melts it flows by capillary action between the matching inner and outer surfaces 242,244 of the inner and outer portions 236,238 of the mold core insert 18. This forms a strong integral gate insert 174 with the desired circular passage 256 and inlet and outlet ducts 262,264 because brazing in a vacuum furnace provides a metallurgical bonding of the nickel alloy to the steel, and does not interfere with heat transfer between the two portions 236,238. The portion of each gate insert 174 having the groove 270 is then machined off to provide a flat rear face 272. The outer surface 274 of the outer portion 238 is also machined to provide the shape seen in Figure 1.

While the description of the apparatus has been given with respect to a preferred embodiment, it is not to be construed in a limiting sense. Variations and modifications will occur to those skilled in the art. For instance, it is apparent that the insert can have different configurations to accommodate nozzles or probes for different types of gating. Similarly, the circular passage and the inlet and outlet ducts can have other configurations for different applications. Other than the hot tip and valve gated embodiments described, the apparatus can also be sprue gated for other applications. It can also be a single cavity apparatus rather than multi-cavity. The circular passage can be machined in either the inner or outer portions or partially in both. It can have different shapes and be located closer or further from the gate, depending on the application.

## Claims

1. An injection molding apparatus having at least one heated probe or nozzle (10) which has a forward nose portion extending into a central well (172) in an insert (174) with a space provided between the nose portion and the surrounding insert, the nose portion being in alignment with a gate (34) extending through the insert (174) to a cavity (36), a melt passage (64) extending from an inlet (232) to convey melt to the gate to fill the cavity, said insert having a circular cooling fluid passage (256) extending therethrough around the forward nose portion adjacent the cavity, said cooling fluid passage extending from inlet and outlet cooling fluid ducts (262;264) which connect respectively to high and low pressure cooling fluid conduits, whereby cooling fluid flows through the passage (256) to provide cooling to the insert (174) around the gate (34),
**characterized in that**
the inlet and outlet cooling fluid ducts (262;264) connect to the circular cooling fluid passage (256) on opposite sides of a baffle (254) in said passage (256).

2. An injection molding apparatus as claimed in claim 1, having a plurality of hot tip gates wherein each insert is a mold core insert.

3. An injection molding apparatus as claimed in claim 1, having a plurality of gates wherein each insert is a gate insert.

4. An injection molding apparatus as claimed in claim 3, wherein each gate is a valve gate and each insert is a valve gate insert.

5. An injection molding apparatus as claimed in claim 1, wherein the inlet and outlet cooling fluid ducts (262;264) connect at opposite sides of the circular cooling fluid passage.

## Patentansprüche

1. Spritzgießvorrichtung mit wenigstens einem Fühler oder einer Düse (10), die einen vorderen Nasenabschnitt aufweist, der sich in eine zentrale Ausnehmung (172) in einem Einsatz (174) erstreckt, wobei ein Zwischenraum zwischen dem Nasenabschnitt und dem umgebenden Einsatz vorgesehen ist, wobei der Nasenabschnitt in Ausrichtung mit einer sich durch den Einsatz (174) zu einem Hohlraum (36) hin erstreckenden Auslauf (34) ist, mit einem Schmelzdurchgang (64), der sich von einem Einlaß (232) zur Beförderung von Schmelze zu dem Auslauf zum Befüllen des Hohlraums erstreckt, wobei der Einsatz einen sich hierdurch um den vorderen Nasenabschnitt in der Nähe des Hohlraums erstreckenden kreisförmigen Kühlflüssigkeitsdurchgang (256) aufweist, wobei sich der Kühlflüssigkeitsdurchgang von Einlaß- zu Auslaßkühlflussigkeitskanälen (262;264) erstreckt, die mit Hochbeziehungsweise Niederdruckkühlflüssigkeitsleitungen verbunden sind, so daß Kühlflüssigkeit durch den Durchgang (256) fließt, um eine Kühlung des Einsatzes (174) um den Auslauf (34) zur Verfügung zu stellen,
**dadurch gekennzeichnet, daß**
die Einlaß- und Auslaßkühlflüssigkeitskanäle (262;263) mit dem kreisförmigen Kühlflüssigkeitsdurchgang (256) an gegenüberliegenden Seiten einer Zwischenwand (254) in dem Durchgang (256) verbunden sind.

2. Spritzgießvorrichtung nach Anspruch 1, mit einer Mehrzahl von Heißdüsenausläufen, wobei jeder Einsatz aus einem Formkerneinsatz besteht.

3. Spritzgießvorrichtung nach Anspruch 1, mit einer Mehrzahl an Ausläufen, wobei jeder Einsatz ein Auslaufeinsatz ist.

4. Spritzgießvorrichtung nach Anspruch 3, wobei jeder Auslauf ein Absperrventil ist und jeder Einsatz ein Absperrventileinsatz ist.

5. Spritzgießvorrichtung nach Anspruch 1, wobei die Einlaß- und Auslaßkühlflüssigkeitskanäle (262;263) an gegenüberliegenden Seiten des kreisförmigen Kühlflüssigkeitsdurchgangs verbunden sind.

## Revendications

1. Dispositif de moulage par injection, comprenant au moins une sonde ou buse chauffée (10), qui présente une partie de nez avant s'étendant à l'intérieur d'un puits central (172) dans un insert (174), un espace étant prévu entre la partie de nez et l'insert qui l'entoure, la partie de nez étant en alignement avec un point d'injection (34) qui s'étend à travers l'insert (174) jusqu'à une cavité (36), un passage de matière fondue (64) s'étendant à partir d'un orifice d'entrée (232) pour acheminer de la matière fondue vers le point d'injection afin de remplir la cavité, ledit insert comportant à l'intérieur un passage circulaire de fluide de refroidissement (256) qui s'étend autour de la partie de nez avant adjacente à la cavité, ledit passage de fluide de refroidissement s étendant depuis des canaux d'entrée et de sortie (262 ; 264) de fluide de refroidissement, qui sont respectivement raccordés à des conduits de fluide de refroidissement à haute pression et à basse pression, le fluide de refroidissement circulant dans le passage (256) pour assurer le refroidissement de l'insert (174) autour du point d'injection (34),
caractérisé en ce que
les canaux d'entrée et de sortie (262 ; 264) de fluide de refroidissement sont raccordés au passage circulaire de fluide de refroidissement (256) de part et d'autre d'un déflecteur (254) dans ledit passage (256).

2. Dispositif de moulage par injection selon la revendication 1, comportant une pluralité de points d'injection capillaires, dans lequel chaque insert est un insert à noyau.

3. Dispositif de moulage par injection selon la revendication 1, comportant une pluralité de points d'injection, dans lequel chaque insert est un insert à injection directe.

4. Dispositif de moulage par injection selon la revendication 3, dans lequel chaque point d'injection est un point d'injection à obturation et chaque insert est un insert à point d'injection à obturation.

5. Dispositif de moulage par injection selon la revendication 1, dans lequel les canaux d'entrée et de sortie (262 ; 264) de fluide de refroidissement sont raccordés de part et d'autre du passage circulaire de fluide de refroidissement.
